# EUROPÄISCHE PATENTSCHRIFT

(11) **EP 1 893 422 B1**
(45) Veröffentlichungstag und Bekanntmachung des Hinweises auf die Patenterteilung: **15.07.2009**
(21) Anmeldenummer: 06741018.3
(22) Anmeldetag: 29.05.2006
(51) Int. Cl.: B60C 23/04

(54) **ANORDNUNG ZUR DRUCKMESSUNG**
ARRANGEMENT FOR MEASURING PRESSURE
SYSTEME DE MESURE DE PRESSION

(30) Priorität: 14.06.2005 AT 10032005
(43) Veröffentlichungstag der Anmeldung: 05.03.2008
(73) Patentinhaber: Electrovac AG, 3400 Klosterneuburg (AT)
(72) Erfinder: HAMMEL, Ernst, A-1140 Wien (AT)
(74) Vertreter: Gibler & Poth Patentanwälte OEG
(86) Internationale Anmeldenummer: PCT/AT2006/000219
(87) Internationale Veröffentlichungsnummer: WO 2006/133466

(56) Entgegenhaltungen:
- US-A1- 2003 210 111
- POHL A ET AL: "DRAHTLOSES MESSEN MIT PASSIVEN OFW SENSOREN AM BEISPIEL DER UEBERWACHUNG DES REIFENLUFTDRUCKES WIRELESSLY INTERROGABLE PASSIVE SAW SENSORS, APPLICATION FOR PERMANENT MONITORING OF TIRE PRESSURE" VDI BERICHTE, DUESSELDORF, DE, 23. Oktober 1997 (1997-10-23), Seiten 305-318, XP009007706 ISSN: 0083-5560

## Beschreibung

Die Erfindung betrifft eine Anordnung zur Druckmessung, insbesondere bei gasgefüllten Reifen, umfassend wenigstens einen Oberflächenwellen-Sensor mit einem piezoelektrischen Trägersubstrat, wobei an wenigstens einer Oberfläche des Trägersubstrats wenigstens eine Erregerelektrode und wenigstens eine Empfängerelektode angeordnet sind, wobei der Oberflächenwellen-Sensor zumindest bereichsweise mit einer sich unter dem Einfluss des zu messenden Druckes verformenden, insbesondere dehnenden und/oder wölbenden, Oberfläche verbunden ist

Oberflächenwellenbauteile sind piezoelektrische Komponenten, die für verschiedenste Anwendungen (Frequenzfilter, Referenzschwinger) in der Hochfrequenztechnik eingesetzt werden. An der Oberfläche von piezoelektrischen Körpern (z.B. Quarz, ZnO) werden Wellen erzeugt, deren Longitudinalkomponente sich mit kleiner Dämpfung parallel zur Oberfläche ausbreitet, während die Transversalkomponente senkrecht zur Oberfläche stark gedampft ist und nur etwa eine Wellenlänge tief in das Substrat einbringt. Solche Wellen können, elektrostriktiv mit Hilfe von aufgedampften Interdigital-Elektroden angeregt werden, die aus kammartig ineinandergreifenden äquidistanten Metallstegen bestehen.

Die Wellenlänge der Oberflächenwelle wird durch den Abstand zweier benachbarter Stege der Kammelektrode festgelegt. Diese Oberflächenwelle kann von einem zweiten Paar Interdigitalelektroden als elektrisches Signal aufgenommen werden, wobei typische Wellenlängen im Bereich von 10 µm liegen. Durch die Schallgeschwindigkeit des piezoelektrischen Körpers ergibt sich die Frequenz, welche typischerweise, etwa bei der Verwendung von Quarz mit einer Schallgeschwindigkeit von etwa 3100m/s, bei etwa 300MHz liegt.

Da die Wellenlänge durch die Struktur der Anregelektroden vorgegeben ist, führen Änderungen der Ausbreitungsgeschwindigkeit, z.B. durch die Dehnung oder Temperaturänderung der Oberfläche zu einer Änderung der Frequenz. Durch Dehnung kann auch der Abstand zwischen den Stegen verändert werden, wodurch es zu einer direkten Beeinflussung der Wellenlänge kommt, was sich ebenfalls auf die Frequenz auswirkt.

Die Überwachung des Reifendrucks kann für die Fahrsicherheit wichtig sind. Durch Unterdruck sinkt die Lebensdauer des Reifens, der Treibstoffverbrauch und die Umfallgefahr steigen. Drei Viertel aller Reifenpannen gehen auf Unterdruck bzw. schleichenden Druckverlust zurück, wobei Reifenpannen die dritthäufigste Pannenursache bei Kraftfahrzeugen ist. Eine Überwachung des Reifendrucks erhöht daher die Lebensdauer der Reifen, senkt den Treibstoffverbrauch und reduziert die Pannenhäufigkeit bzw. die Umfallgefahr.

Es ist ein System zur Überwachung des Reifendrucks mittels eines piezoelektrischen Sensors bekannt, wobei der Sensor unter dem Einfluss des Reifendrucks gedehnt wird und sich die Kapazität des Sensors ändert. Der Sensor ist dabei die wirksame Kapazität in einem Schwingkreis, welcher induktiv an einen weiteren Schwingkreis gekoppelt ist, welcher im Fahrzeug nächst dem Reifen angeordnet ist. Durch Veränderung der Kapazität des Sensors, verändert sich die Resonanzfrequenz des Schwingkreises. Durch Auswertung dieser Frequenzverschicbung kann auf den herrschenden Druck geschlossen werden. Nachteilig an einer derartigen Anordnung ist der hohe Aufwand und die hohen bewegten Massen, welche zu einer hohen Unwucht des Reifens führen.

Hinzu kommt die mangelnde mechanische Belastbarkeit üblicher piezoelektrischer Bauelemente und deren geringe Lebensdauer, vor allem beim Einsatz in thermisch und mechanisch stark beanspruchten Umgebungen. Die geringe Wärmeleitfähigkeit üblicher piezoelektrischer Bauelemente führt beim Einsatz in Umgebungen, welche thermisch stark wechselnd beansprucht werden, leicht zu Fehlmessungen aufgrund falscher bzw. mangelnder Temperaturkompensation.

Es sind weiters Drucksensoren bekannt, welche piezoelektrische Aufnehmer aufweisen, welche an einer sind unter Einfluss eines Drucks ändernden bzw. verformenden Membran angeordnet sind, wobei diese piezoelektrischen Aufnehmer in der Art von Dehnmessstreifen in einer aktiven Widerstandmessbrücke betrieben werden. Zusätzlich zu den bereits dargelegten Nachteilen kommt bei einer derartigen Anordnung hinzu, dass für deren Betrieb eine aktive Spannungsversorgung notwenig ist.

In der Druckschrift: "Drahtloses Messen mit passiven OFW Sensoren am Beispiel der Überwachung des Reifenluftdrucks, VDI Berichte Düsseldorf XP009007706, wird eine Anordnung zur Messung des Reifendrucks eines Fahrzeugs mittels einer Oberflächenwellenanordnung beschrieben, sowie die drahtlose Übermittlung der Messdaten, wobei die Oberflächenwellenanordnung aus einem herkömmlichen piezoelektrischen Substrat gebildet ist.

Die US 2003/210111 A1 wiederum beschreibt einen SAW-Filter mit einem piezoelektrischen Substrat herkömmlicher Ausbildung, wobei vorgesehen ist, dass auf oder zusammen mit diesem bekannten piezoelektrischen Substrat weiters ein CNT-Material angeordnet ist. Das CNT-Material dient dabei lediglich zur Verbesserung akustischer Bedingungen. Aufgabe der Erfindung ist es daher eine Anordnung zur Druckmessung der eingangs genaunten Art anzugeben, mit welcher die genannten Nachteile vermieden werden können, welche kompakt in den Abmessungen, einfach im Aufbau, einfach und kostengünstig in der Herstellung ist, welche eine geringe Masse aufweist, sich gut gleichmäßig erwärmt und sich schnell an geänderte thermische Umgebungsbedingungen anpasst, welche unanfällig gegen statische Aufladung ist, welche robust gegen mechanische Beanspruchungen und chemische Belastungen ist, und welche flexibel in unterschiedlichen Applikationen anwendbar und umweltschonend ist.

Erfindungsgemäß wird dies dadurch erreicht, dass das piezoelektrische Trägersubstrat einen nanoskaligen Kohlenstoff, vorzugsweise Kohlenstoff-Fullerene, Kohlenstoff-Nanofasern oder Kohlenstoff-Nanoröhren, zur Ausbildung der piezoelektrischen Eigenschaften aufweist.

Dadurch kann eine Anordnung zur Druckmessung geschaffen werden, welche thermisch und chemisch in einem weiten Bereich stabil ist, welche unempfindlich gegen mechanische Beanspruchung, wie etwa Schläge oder Biegung, ist, welche einfach und flexibel herstellbar sind, welche ein gute thermische Leitfähigkeit aufweist und sich dadurch schnell an sich ändernde thermische Umgebungen anpassen kann, welche eine gute elektrische Leitfähigkeit aufweist und unempfindlich gegen statische Aufladung ist, und welche vollständig recycelbar bzw. rückstandslos verbrennbar ist.

In Weiterführung der Erfindung kann vorgesehen sein, dass das Trägersubstrat ein Polymer, insbesondere Polyamid, Polyurethan, Epoxid, synthetischer Gummi, PEEK und/oder LCP, umfasst, welches nanoskalige Kohlenstoffe beinhaltet. Dadurch kann ein Trägersubstrat einfach hergestellt werden, und weist in vielen Bereichen die positiven Eigenschaften der jeweiligen Materialien auf. Ein derartiges Trägersubstrat ist entgegen üblicher piezoelektrischer Trägersubstrate innerhalb weiter Grenzen flexibel, dehnbar und biegbar. Darüber hinaus schlagzäh und wenig spröde.

In diesem Zusammenhang kann in Weiterführung der Erfindung vorgesehen sein, dass die wenigstens eine Erregerelektrode mit wenigstens einer Empfangsantenne verbunden ist und/oder, dass die wenigstens eine Empfängerelektrode mit wenigstens einer Sendeantenne verbunden ist. Dadurch ist es möglich, die Anregungsenergie über ein elektromagnetisches Feld einzustrahlen bzw, die Empfängerelektrode abgegebene hochfrequente elektrische Energie abzustrahlen. Dadurch ist es möglich eine passive, lediglich von außen mit Energie versorgte Anordnung zur Druckmessung zu schaffen. Eine solche ist, aufgrund der fehlenden Energieversorgung noch kompakter, leichter, günstige in der Herstellung und nahezu unbegrenzt, zumindest aber länger als die Lebensdauer eines Reifens, lagerfähig. Gemäß einer weiteren Ausführungsform der Erfindung kann vorgesehen sein, dass eine Spannungsquelle, insbesondere eine Batterie und/oder ein Akku, vorgesehen ist. Dadurch ist es möglich höhere Sendeleistungen zu realisieren. Dadurch ist es möglich die Daten an einen Empfänger zu übermitteln, welcher nicht direkt in einem Bereich nächst dem Reifen angeordnet ist. So können damit etwa die Daten aller Reifen eines Fahrzeugs direkt an einen zentral angeordneten Empfänger übermittelt werden.

Gemäß wieder einer anderen Ausführungsform der Erfindung kann vorgesehen sein, dass der Oberflächenwellen-Sensor mit einer Membran einer evakuierten Druckdose verbunden ist, und/oder mit der Membran einstückig ausgebildet ist. Dadurch kann die definierte Verbiegung einer Membran gegen einen bekannten Gasdruck bestimmt werden, wodurch sehr genau auf den herrschenden Druck geschlossen werden kann. Durch die einstückige Ausbildung kann auf einen separaten Träger verzichte werden, wodurch ein zusätzliches Bauelement gespart, und sowohl die Kosten, der Fertigungsaufwand als auch die Masse reduziert werden.

Eine Variante der Erfindung kann darin bestehen, dass der Oberflächenwellen-Sensor einstückig mit einem Reifen ausgebildet ist, wobei der Reifen das Trägersubstrat bildet und wenigstens im Bereich des Oberflächenwellen-Sensors nanoskaligen Kohlenstoff beinhaltet. Dadurch kann einfach unter Vermeidung einer separaten evakuierten Druckdose die Verbiegung einer flexiblen Oberfläche, nämlich der Reifenoberfläche, unter dem Einfluss des Reifendrucks gemessen, und dadurch der Reifendruck ermittelt werden.

In weiterer Ausgestaltung der Erfindung kann vorgesehen sein, dass wenigstens die Erregerelektrode und/oder wenigstens die Empfängerelektrode von einem flexiblen Schutzmantel umhüllt bzw. bedeckt sind. Dadurch können Beschädigungen verhindert werden.

In Weiterbildung der Erfindung kann vorgesehen sein, dass Mittel zur Temperaturmessung vorgesehen sind. Dadurch können Temperatureinflüsse wirksam kompensiert bzw. berücksichtigt werden.

Eine andere mögliche Ausführungsform kann darin bestehen, dass die Mittel zur Temperaturmessung wenigstens einen temperatursensitiven Widerstand umfassen, wobei vorzugsweise der temperatursensitive Widerstand zumindest bereichsweise einstückig mit der wenigstens einen Erregerelektrode und/oder der wenigstens einen Empfängerelektrode ausgebildet ist. Dadurch ist eine einfache Temperaturmessung möglich.

Die Erfindung betrifft weiters einen Reifen, vorgesehen zum Befüllen mit einem Gas, wobei zu Messung des Reifendrucks bzw. des Drucks des Gases im gasgefüllten Reifen, vorgesehen ist, dass, vorzugsweise an einer thermisch wenig beanspruchten Stelle, wenigstens eine erfindungsgemäße Anordnung zur Druckmessung vorgesehen ist.

Dadurch kann bei einem Reifen, während des Betriebs der Reifendruck überprüft bzw. kontrolliert werden. Dadurch können Unterdruck/Überdruck, sowie sich verändernder, insbesondere fallender, Reifendruck frühzeitig erkannt werden, wodurch Unfälle und Pannen vermieden werden können, und das Leben der Straßenteilnehmer sicherer wird. Durch die Verwendung einer erfindungsgemäßen Anordnung zur Druckmessung bei einem Reifen kann ein Reifen geschaffen werden, welcher, bei unbeeinträchtigter Betriebsbereitschaft der Anordnung zur Druckmessung über eine lange Zeitspanne betrieben und/oder gelagert werden kann, welcher keine nennenswerten Unwuchten aufweist und günstig herstellbar ist. In Weiterführung der Erfindung kann vorgesehen sein, dass die wenigstens eine Anordnung zur Druckmessung an einer Innenfläche bzw. Innenschicht des Reifens angeordnet ist. Dadurch ist die erfindungsgemäße Anordnung zur Druckmessung dauerhaft vor Beschädigung durch äußere Fremdkörper geschützt.

In diesem Zusammenhang kann in Weiterführung der Erfindung vorgesehen sein, dass die wenigstens eine Anordnung zur Druckmessung im inneren Aufbau des Reifens integriert ist, insbesondere im Bereich einer Gewebeschicht, eines Gürtels, des Innenbaus bzw. der Karkasse. Dadurch kann ein besonders wirkungsvoller Schutz der erfindungsgemäßen Anordnung zur Druckmessung erreicht werden. Dadurch kann auch eine Beschädigung beim Umgang mit dem Reifen in einer Werkstatt oder bei der Lagerung wirkungsvoll verhindert werden.

Die Erfindung wird unter Bezugnahme auf die beigeschlossenen Zeichnungen, in welchen lediglich bevorzugte Ausführungsformen dargestellt sind, näher beschrieben. Dabei zeigt:
Fig. 1 eine erste bevorzugte Ausführung einer Anordnung zur Druckmessung;
Fig. 2 eine zweite bevorzugte Ausführung einer Anordnung zur Druckmessung;
Fig. 3 eine dritte bevorzugte Ausführung einer Anordnung zur Druckmessung;
Fig. 4 eine vierte bevorzugte Ausführung einer Anordnung zur Druckmessung;
Fig. 5 ein Reifen in geschnittener Darstellung mit zwei erfindungsgemäßen Anordnungen zur Druckmessung; und
Fig. 6 ein Reifen in geschnittener Darstellung mit einer ersten erfindungsgemäßen Anordnung zur Druckmessung.

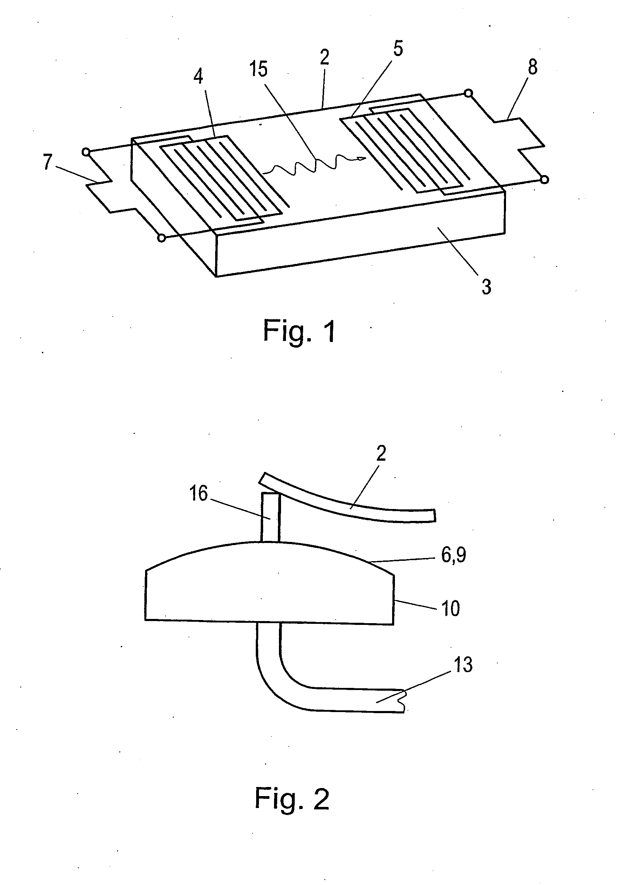

Die Fig. 1 bis 6 zeigen Ausführungsformen bzw. Einzellteile einer Anordnung zur Druckmessung, insbesondere bei gasgefüllten Reifen 1, umfassend wenigstens einen Oberflächenwellen-Sensor 2 mit einem piezoelektrischen Trägersubstrat 3, wobei an wenigstens einer Oberfläche des Trägersubstrats 3 wenigstens eine Erregerelektrode 4 und wenigstens eine Empfängerelektrode 5 angeordnet sind, wobei der Oberflächenwellen-Sensor 2 zumindest bereichsweise mit einer sich unter dem Einfluss des zu messenden Druckes verformenden, insbesondere dehnenden und/oder wölbenden, Oberfläche 6 verbunden ist, wobei das Trägersubstrat 3 wenigstens einen nanoskaligen Kohlenstoff, vorzugsweise Kohlenstoff-Fullerene, Kohlenstoff-Nanofasern oder Kohlenstoff-Nanoröhren, umfasst. Erfindungsgemäße Anordnungen zur Druckmessung zeichnen sich dadurch aus, dass diese thermisch und chemisch in einem weiten Bereich stabil sind, unempfindlich gegen mechanische Beanspruchung, wie etwa Schläge oder Biegung, sind, einfach und flexibel herstellbar sind, eine gute thermische Leitfähigkeit aufweisen und sich dadurch schnell an sich ändernde thermische Umgebungen anpassen können, dass diese eine gute elektrische Leitfähigkeit aufweisen und unempfindlich gegen statische Aufladung sind, und vollständig recycelbar bzw. rückstandslos verbrennbar sind. Bevorzugt ist vorgesehen erfindungsgemäße Anordnungen zur Druckmessung bei Reifen 1 anzuwenden bzw. in solche einzubauen, welche zum Befüllen mit einem Gas, vorzugsweise Luft und/oder Stickstoff, vorgesehen sind. Weiters kann vorgesehen sein an Maschinen, welche zum ständigen und/oder temporären Betrieb mit derartigen Reifen 1 mittelbar und/oder unmittelbar vorgesehen sein, Kontaktstellen, insbesondere Empfänger und/oder Auswerteeinheiten, für die, insbesondere drahtlose, Kontaktierung bzw. Verbindung zu der wenigstens einen Anordnung zur Druckmessung, vorzusehen. Bei derartigen Maschinen kann es sich etwa um Kraftfahrzeuge, wie etwa Automobile, Motorräder, Untergrundbahnen, oder etwa um Luftfahrzeuge handeln. Vorzugsweise ist auch vorgesehen Wartungsmaschinen, wie etwa Reifenbefüllvorrichtungen und/oder Reifendruckprüfvorrichtungen, bzw. Örtlichkeiten wie Werkstätten, Tankstellen und/oder Mautstationen mit derartigen Kontaktstellen auszustatten. Es können weiters tragbare Handgeräte zum Auslesen der Druckinformation etwa für Wartungsmannschaften bzw. die Exekutive vorgesehen sein.

Fig. 1 zeigt eine einfache Ausführungsform einer erfindungsgemäßen Anordnungen zur Druckmessung. Diese ist durch einen Oberflächenwellen-Sensor 2 (auch surface acoustic wave device, kurz SAW-device) gebildet. Auf einem Trägersubstrat 3 sind wenigstens eine Erregerelektrode 4 und wenigstens eine Empfängerelektrode 5 angeordnet.

Das Trägersubstrat 3 umfasst bei gegenständlicher Erfindung wenigstens einen nanoskaligen Kohlenstoff, vorzugsweise Kohlenstoff-Fullerene, Kohlenstoff-Nanofasern oder Kohlenstoff-Nanoröhren. Bei nanoskaligem Kohlenstoff handelt es sich um große Anhäufungen von Kohlenstoffatomen. Diese sind vorzugsweise in regelmäßigen Strukturen angeordnet, und bilden eine Zwischenstufe zwischen Molekülen und Festkörpern. Eine häufige Form nanoskaligen Kohlenstoffs ist das C₆₀-Molekül, welches auch in der Natur, als Rest interstellarer Prozesse, nachweisbar ist, und eine symmetrische Kugelstruktur aufweist. Aufgrund der Ähnlichkeit der regelmäßigen Atomanordnungen zu den geodätischen Kuppelbauten des amerikanischen Architekten Richard Buckminster Fuller werden derartige nanoskalige Kohlenstoffe auch Kohlenstoff-Fullerene genannt. Die länglichen nanoskaligen Kohlenstoffinoleküle werden Kohlenstoff-Nanofasern, Kohlenstoff-Nanoröhren, Nanotubes oder Buckytubes genannt. Nanoskalige Kohlenstoffe weisen piezoelektrische Eigenschaften auf.

Bevorzugt ist vorgesehen, dass das Trägersubstrat 3 ein Polymer, insbesondere Polyamid, Polyurethan, Epoxid, synthetischer Gummi, PEEK und/oder LCP, umfasst, welches nanoskalige Kohlenstoffe beinhaltet. Dadurch ist es möglich ein Trägersubstrat 3 zu bilden, welches zu geringen Kosten in unterschiedlichen Formen hergestellt werden kann, und welches biegsam und dehnbar ist. Dadurch ist ein solches bevorzugtes Trägersubstrat 3 auch für Anwendungen einsetzbar, für welche herkömmliche, spröde Trägersubstrate, wie etwa Quarz, nicht einsetzbar sind.

Bei der ersten bevorzugten Ausführungsform gemäß der Fig. 1 sind jeweils ein Paar Erregerelektroden 4 und ein Paar Empfängerelektroden 5 vorgesehen, welche an der Oberfläche des Trägersubstrats 3 angeordnet sind. Es kann vorgesehen sein, die Erregerelektroden 4 und/oder die Empfängerelektroden 5 in das vorzugsweise polymere Trägersubstrat 3 einzubetten. Es kann aber auch vorgesehen sein, die Erregerelektroden 4 und/oder die Empfängerelektroden 5 mittels photolithographischer Verfahren, Aufdampfen einer leitfähigen Schicht und/oder Ätzverfahren an der Oberfläche des Trägersubstrats 3 anzuordnen. Die Erregerelektroden 4 und/oder die Empfängerelektroden 5 können jedes leitfähige Element umfassen, bevorzugt ist vorgesehen, dass die Erregerelektroden 4 und/oder die Empfängerelektroden 5 die Metalle Kupfer, Silber, Gold und/oder Aluminium beinhalten. Zum Schutz der Erregerelektroden 4 und/oder der Empfängerelektroden 5 kann vorgesehen sein, dass wenigstens die Erregerelektrode 4 und/oder wenigstens die Empfängerelektrode 5 von einem flexiblen Schutzmantel 11 umhüllt bzw. bedeckt sind. Ein derartiger Schutzmantel 11 kann etwa durch ein Polymer gebildet sind, wobei vorgesehen sein kann, dass es sich dabei um das gattungsmäßig gleiche Polymer handelt, welches bevorzugt als Träger bzw. Füllstoff für den nanoskaligen Kohlenstoff dient.

Die Erregerelektroden 4 und/oder die Empfängerelektroden 5 sind bei den bevorzugten Ausführungsformen durch jeweils zwei kammartig ineinander greifende Elektroden gebildet, wobei es durch Verformung des Oberflächenwellen-Sensors 2 zu einer Veränderung der Wellenlänge der Oberflächenwelle 15 kommt.

Es kann vorgesehen sein, dass die Erregerelektroden 4 mit einer, eine hochfrequente Wechselspannung generierenden, elektronischen Schaltung verbunden sind, welche zur Energieversorgung mit einer Batterie und/oder einem Akku verbunden sein kann. Bevorzugt ist vorgesehen, dass die wenigstens eine Erregerelektrode 4 mit wenigstens einer Empfangsantenne 7 verbunden ist. Dadurch ist es möglich, die zum Betrieb nötige Energie aus einem elektromagnetischen Feld zu beziehen. Unabhängig von der Art der Energiezufuhr ist vorzugsweise vorgesehen, dass die wenigstens eine Empfängerelektrode 5 mit wenigstens einer Sendeantenne 8 verbunden ist. Die Frequenz der abgestrahlten elektromagnetischen Strahlung liefert eine Information über den Grad an Verformung bzw. Durchbiegung des Oberflächenwellen-Sensors 2. Da Sender und Empfänger dieselbe Frequenzreferenz verwenden, ist kohärente Detektion und damit eine Messung von Differenzphasen zur Steigerung der Auflösung möglich. Weil die anregende Wechselspannung mit Funk eingestrahlt wird, sind die Oberflächenwellen-Sensoren 2 passive wartungsfreie Bauelemente, die keine zusätzliche Versorgungsspannung brauchen.

Es kann auch vorgesehen sein, aktive und/oder passive RFID-Transponder zum Empfang und/oder zum Senden der Daten zu verwenden.

Zur Auswertung der Frequenzinformationen kann eine Signalverarbeitungseinheit vorgesehen sein. Diese kann sowohl in der unmittelbaren Umgebung des Oberflächenwellen-Sensors 2 vorgesehen sein, als auch im Bereich einer Kontaktstelle, insbesondere eines Empfängers, welcher die, mittels Antenne vom Oberflächenwellen-Sensor 2 übermittelte elektromagnetische Strahlung, empfängt.

Es kann vorgesehen sein eine zentrale Kontaktstelle zum gleichzeitigen Betrieb mehrerer Anordnungen zur Druckmessung vorzusehen. Es kann auch vorgesehen sein nächst einer jeden Anordnung zur Druckmessung eine Kontaktstelle vorzusehen.

Fig. 2 zeigt eine zweite bevorzugte Ausführungsform einer erfindungsgemäßen Anordnung zur Druckmessung. Das zu messende Gas unter Druck wird über eine Zuleitung 13 in eine, gegenüber einer Atmosphäre mit kalibriertem bzw. bekanntem Druck, evakuierte Druckdose 10 geleitet. Die Ausdehnung bzw. Verformung einer Membran 9 der Druckdose 10 wird an einem Stößel 16 weitergegeben. Dieser Stößel 16 verbiegt bzw. verformt den Oberflächenwellen-Sensor 2, welcher in bereits dargelegter Art und Weise die Verformung bzw. Verbiegung detektiert und weiterleitet.

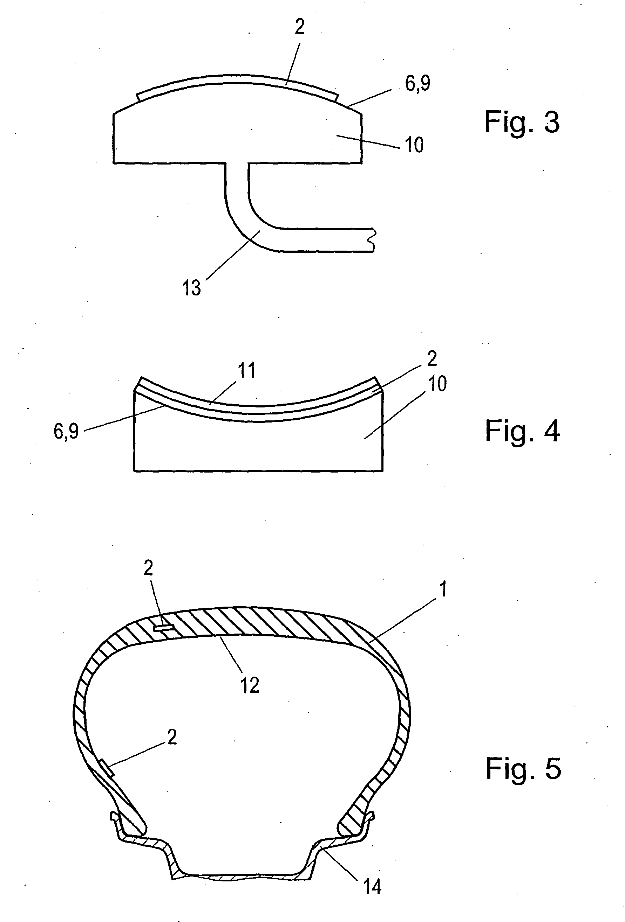

Aufgrund der Verformbarkeit bzw. Verbiegbarkeit einer erfindungsgemäßen Anordnung zur Druckmessung kann vorgesehen sein, wie in den Fig. 3 und 4 dargestellt, den wenigstens einen Oberflächenwellen-Sensor 2, vorzugsweise unmittelbar, auf einer Membran 9 einer Druckdose 10 anzuordnen. Bevorzugt kann vorgesehen sein, die Membran 9 der Druckdose 10 selbst aus dem Oberflächenwellen-Sensor 2 bzw. dem Trägersubstrat 3 des Oberflächenwellen-Sensors 2 zu bilden. Dadurch ist eine unmittelbare und verzögerungsfreie Übertragung des Drucks von der Druckdose 10 auf den Oberflächenwellen-Sensor 2 gegeben. Fig. 3 zeigt eine zu Fig. 2 analoge Anordnung mit einer Zuleitung 13 des Gases unter Druck. Fig. 4 zeigt eine evakuierte Druckdose 10, welche mit einem Gas unter bekanntem Druck befüllt ist, und in einer Umgebung mit dem zu messenden Druck angeordnet ist. Der Umgebungsdruck verformt die Membran 9 und damit auch den Oberflächenwellen-Sensor 2. Bei dieser Ausführung ist der Oberflächenwellen-Sensor 2 mit einem flexiblen Schutzmantel 11 überzogen.

Da es aufgrund von Temperaturänderungen zu einer Trifft der Messergebnisse kommen kann, kann vorgesehen sein Mittel zur Temperaturmessung vorzusehen und die Messergebnisse zur Korrektur, der von dem wenigstens einen Oberflächenwellen-Sensor 2 übermittelten Daten in eine Messdatenauswertung einfließen zu lassen. Derartige Mittel zur Temperaturmessung können etwa wenigstens einen temperatursensitiven Widerstand, etwa einen NTC- oder PTC-Widerstand und/oder ein Thermoelement umfassen. Bei einer bevorzugten Ausführungsform kann vorgesehen sein, dass der temperatursensitive Widerstand zumindest bereichsweise einstückig mit der wenigstens einen Erregerelektrode 4 und/oder der wenigstens einen Empfängerelektrode 5 ausgebildet ist.

Es kann vorgesehen sein, eine erfindungsgemäße Anordnung zur Druckmessung an jeder Stelle eines Reifens 1 anzuordnen, welcher zum Befüllen mit Gas vorgesehen ist, bzw. welcher mit Gas gefüllt ist. Auch kann vorgesehen sein eine erfindungsgemäße Anordnung zur Druckmessung an einer Felge 14 bzw. einem einer Felge 14 zugehörigen Teil anzuordnen. Es kann auch vorgesehen sein eine erfindungsgemäße Anordnung zur Druckmessung an einem Ventil anzuordnen. Darüber hinaus kann es, vor allem aus Gründen der Redundanz, der höheren Genauigkeit der Messdaten sowie der Verringerung der Unwucht, vorgesehen sein mehr als eine Anordnung zur Druckmessung an einer der vorgenannten Stellen bzw. an unterschiedlichen Stellen eines Reifens anzuordnen.

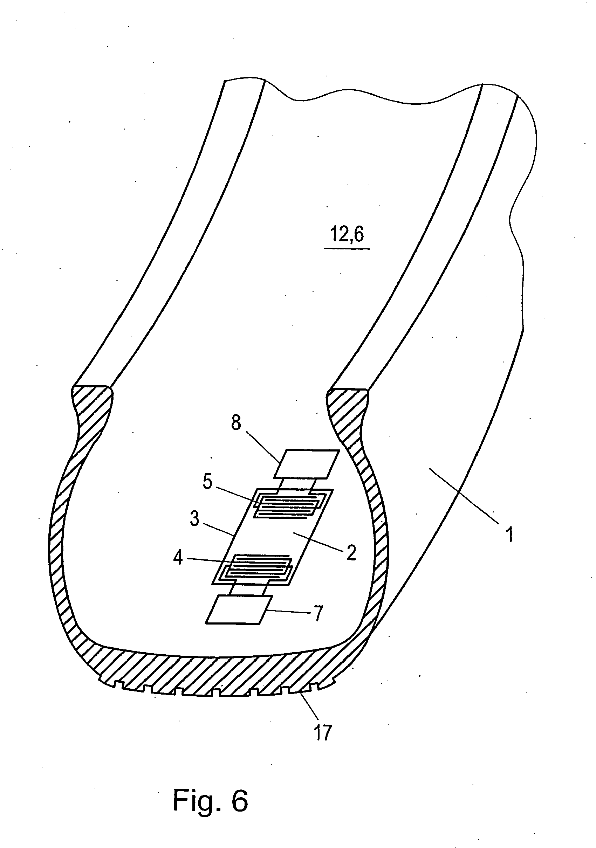

Bei Anordnung an einem Reifen 1 ist bevorzugt vorgesehen, die Anordnung zur Druckmessung an einer thermisch wenig beanspruchten Stelle anzuordnen. Es kann vorgesehen sein erfindungsgemäße Anordnungen zur Druckmessung sowohl an der inneren Oberfläche 12 eines Reifens 1, als auch im Inneren eines Reifens 1, insbesondere im Bereich einer Gewebeschicht, eines Gürtels, des Innenbaus bzw. der Karkasse, anzuordnen. Insbesondere kann vorgesehen sein, dass der Oberflächenwellen-Sensor 2 einstückig mit einem Reifen 1 ausgebildet ist, wobei der Reifen 1 das Trägersubstrat 3 bildet und wenigstens im Bereich des Oberflächenwellen-Sensors 2 nanoskaligen Kohlenstoff beinhaltet. Dabei kann vorgesehen sein, zumindest bereichsweise anstelle des technischen Rußes Teile des Reifens 1 mit nanoskaligem Kohlenstoff zu füllen. Fig. 6 zeigt eine besonders bevorzugte Ausführungsform einer erfindungsgemäßen Anordnung zur Druckmessung. Dabei ist ein Oberflächenwellen-Sensor 2 an der der Lauffläche 17 des Reifens 1 gegenüberliegenden Innenseite 12 angeordnet. Da die Lauffläche 17 weniger gewalkt wird als die Seitenwände 18 des Reifens 1, weist diese eine geringere Erwärmung als die Seitenwände 18 auf. Bei der besonders bevorzugten Ausführungsform sind sowohl die Erregerelektroden 4 mit wenigstens einer Empfangsantenne 7 und die wenigstens eine Empfängerelektrode 5 mit wenigstens einer Sendeantenne 8 verbunden. Die zum Betrieb notwendige Energie wird von außen eingestrahlt, und die Weiterverarbeitung bzw. Analyse der abgestrahlten Signale wird ebenfalls an einer anderen Stelle vorgenommen. Eine derartige Anordnung zur Druckmessung weist eine äußerst geringe Masse auf und führt dadurch zu geringen Unwuchten. Hinzu kommt, dass ein derartige Anordnung zur Druckmessung rein passiv arbeitet und daher verschleißfrei über eine lange Zeitdauer betrieben und gelagert werden kann.

## Patentansprüche

1. Anordnung zur Druckmessung, insbesondere bei gasgefüllten Reifen (1), umfassend wenigstens einen Oberflächenwellen-Sensor (2) mit einem piezoelektrischen Trägersubstrat (3), wobei an wenigstens einer Oberfläche des Trägersubstrats (3) wenigstens eine Erregerelektrode (4) und wenigstens eine Empfängerelektrode (5) angeordnet sind, wobei der Qberflächenwellen-Sensor (2) zumindest bereichsweise mit einer sich unter dem Einfluss des zu messenden Druckes verformenden, insbesondere dehnenden und/oder wölbenden, Oberfläche (6) verbunden ist, **dadurch gekennzeichnet, dass** das piezoelektrische Trägersubstrat (3) einen nanoskaligen Kohlenstoff, vorzugsweise Kohlenstoff-Fullerene, Kohlenstoff-Nanofasern oder Kohlenstoff-Nanoröhren, zur Ausbildung der piezoelektrischen Eigenschaften ausweist.

2. Anordnung nach Anspruch 1, **dadurch gekennzeichnet, dass** das Trägersubstrat (3) ein Polymer, insbesondere Polyamid, Polyurethan, Epoxid, synthetischer Gummi, PEEK und/oder LCP, umfasst, welches nanoskalige Kohlenstoffe beinhaltet.

3. Anordnung nach Anspruch 1 oder 2, **dadurch gekennzeichnet, dass** die wenigstens eine Erregerelektrode (4) mit wenigstens einer Empfangsantenne (7) verbunden ist und/oder, dass die wenigstens eine Empfängerelektrode (5) mit wenigstens einer Sendeantenne (8) verbunden ist.

4. Anordnung nach Anspruch 1, 2 oder 3, **dadurch gekennzeichnet, dass** eine Spannungsquelle, insbesondere eine Batterie und/oder ein Akku, vorgesehen ist.

5. Anordnung nach einem der Anspruche 1 bis 4, **dadurch gekennzeichnet, dass** der Oberflächenwellen-Sensor (2) mit einer Membran (9) einer evakuierten Druckdose (10) verbunden ist, und/oder mit der Membran (9) einstückig ausgebildet ist.

6. Anordnung nach einem der Ansprüche 1 bis 4, **dadurch gekennzeichnet, dass** der Oberflächenwellen-Sensor (2) einstückig mit einem Reifen (1) ausgebildet ist, wobei der Reifen (1) das Trägersubstrat (3) bildet und wenigstens im Bereich des Oberflächenwellen-Sensors (2) nanoskaligen Kohlenstoff beinhaltet.

7. Anordnung nach einem der Ansprüche 1 bis 6, **dadurch gekennzeichnet, dass** wenigstens die Erregerelektrode (4) und/oder wenigstens die Empfängerelektrode (5) von einem flexiblen Schutzmantel (11) umhüllt bzw. bedeckt sind.

8. Anordnung nach einem der Ansprüche 1 bis 7, **dadurch gekennzeichnet, dass** Mittel zur Temperaturmessung vorgesehen sind.

9. Anordnung nach Anspruch 8, **dadurch** gekennzeichet, dass die Mittel zur Temperaturmessung wenigstens einen temperatursensitiven Widerstand umfassen, wobei vorzugsweise der temperatursensitive Widerstand zumindest bereichsweise einstückig mit der wenigstens einen Erregerelektrode (4) und/oder der wenigstens einen Empfängerelektrode (5) ausgebildet ist.

10. Reifen (1), vorgesehen zum Befüllen mit einem Gas, **dadurch gekennzeichnet, dass**, vorzugsweise an einer thermisch wenig beanspruchten Stelle, wenigstens eine Anordnung zur Druckmessung nach einem der Ansprüche 1 bis 9 vorgesehen ist.

11. Reifen (1) nach Anspruch 10, **dadurch** gekenntzeichnet, dass die wenigstens eine Anordnung zur Druckmessung an einer Innenfläche (12) bzw. Innenschicht des Reifens (1) angeordnet ist.

12. Reifen (1) nach Anspruch 10 oder 11, **dadurch gekennzeichnet, dass** die wenigstens eine Anordnung zur Druckmessung im inneren Aufbau des Reifens (1) integriert ist, insbesondere im Bereich einer Gewebeschicht, eines Gürtels, des Innenbaus bzw. der Karkasse.

## Claims

1. An arrangement for pressure measurement, especially in the case of gas-filled tires (1), comprising at least one surface-wave sensor (2) with a piezoelectric carrier substrate (3), with at least one exciter electrode (4) and at least one receiver electrode (5) being arranged on at least one surface of the carrier substrate (3), with the surface-wave sensor (2) being connected at least in sections with a surface (6) which deforms, especially expands and/or bulges, under the influence of the pressure to be measured, **characterized in that** the piezoelectric carrier substrate (3) comprises a nanoscale carbon, preferably carbon fullerenes, carbon nanofibers or carbon nanotubes, for forming piezoelectric properties.

2. An arrangement according to claim 1, **characterized in that** the carrier substrate (3) comprises a polymer, especially polyamide, polyurethane, epoxide, synthetic rubber, PEEK and/or LCP, which contains nanoscale carbon.

3. An arrangement according to claim 1 or 2, **characterized in that** the at least one exciter electrode (4) is connected with at least one receiving aerial (7) and/or that the at least one receiving electrode (5) is connected with at least one transmitting antenna.

4. An arrangement according to claim 1, 2 or 3, **characterized in that** a voltage source, especially a battery and/or rechargeable battery, is provided.

5. An arrangement according to one of the claims 1 to 4, **characterized in that** the surface-wave sensor (2) is connected with a membrane (9) of an evacuated barometric cell (10) and/or is arranged integrally with the membrane (9).

6. An arrangement according to one of the claims 1 to 4, **characterized in that** the surface-wave sensor (2) is arranged integrally with a tire (1), with the tire (1) forming the carrier substrate (3) and contains nanoscale carbon at least in the area of the surface-wave sensor (2).

7. An arrangement according to one of the claims 1 to 6, **characterized in that** at least the exciter electrode (4) and/or at least the receiver electrode (5) are enclosed or covered by a flexible protective sheath (11).

8. An arrangement according to one of the claims 1 to 7, **characterized in that** means for temperature measurement are provided.

9. An arrangement according to claim 8, **characterized in that** the means for temperature measurement comprise at least one temperature-sensitive resistor, with preferably the temperature-sensitive resistor being arranged integrally at least in sections with the at least one exciter electrode (4) and/or the at least one receiver electrode (5).

10. A tire (1), provided for filling with gas, **characterized in that** at least one arrangement for pressure measurement according to one of the claims 1 to 9 is provided, preferably at a location that is stressed very little in a thermal respect.

11. A tire (1) according to claim 10, **characterized in that** the at least one arrangement for pressure measurement is arranged on an inside surface (12) or inside layer of the tire (1).

12. A tire (1) according to claim 10 or 11, **characterized in that** the at least one arrangement for pressure measurement is integrated in the inner structure of the tire (1), especially in the area of a fabric layer, a belt, the inside structure or the carcass.

## Revendications

1. Système de mesure de la pression, en particulier pour des pneumatiques (1) remplis de gaz, comprenant au moins un capteur d'ondes de surface (2) avec un substrat portant piézoélectrique (3), dans lequel au moins une électrode d'excitation (4) et au moins une électrode de réception (5) sont disposées sur au moins une surface du substrat portant (3), dans lequel le capteur d'ondes de surface (2) est relié au moins par zones avec une surface (6) qui se déforme, en particulier s'étire et/ou se bombe, sous l'effet de la pression à mesurer, **caractérisé en ce que** le substrat portant piézoélectrique (3) présente du carbone à l'échelle nanométrique, de préférence des fullerènes de carbone, des nanofibres de carbone ou des nanotubes de carbone, pour produire les propriétés piézoélectriques.

2. Système selon la revendication 1, **caractérisé en ce que** le substrat portant (3) est un polymère, en particulier de la polyamide, du polyuréthane, de l'époxy, du caoutchouc synthétique de la PEEK et/ou du LCP, qui contient le carbone à l'échelle nanométrique.

3. Système selon la revendication 1 ou 2, **caractérisé en ce que** l'au moins une électrode d'excitation (4) est reliée à au moins une antenne de réception (7) et/ou **en ce que** l'au moins une électrode de réception (5) est reliée à au moins une antenne d'émission (8).

4. Système selon la revendication 1, 2 ou 3, **caractérisé en ce qu'**une source de tension électrique est prévue, en particulier une batterie et/ou un accumulateur,

5. Système selon l'une des revendications 1 à 4, **caractérisé en ce que** le capteur d'ondes de surface (2) est relié à une membrane (9) d'une capsule sous pression (10) dans laquelle est créé un vide, et/ou est formé d'un seul tenant avec la membrane (9).

6. Système selon l'une des revendications 1 à 4, **caractérisé en ce que** le capteur d'ondes de surface (2) est formé d'un seul tenant avec un pneumatique (1), lequel pneumatique (1) forme le substrat portant (3) et contient, au moins au niveau du capteur d'ondes de surface (2), du carbone nanométrique.

7. Système selon l'une des revendications 1 à 6, **caractérisé en ce qu'**au moins l'électrode d'excitation (4) et/ou au moins l'électrode de réception (5) sont enveloppées ou recouvertes par une enveloppe protectrice (11) flexible.

8. Système selon l'une des revendications 1 à 7, **caractérisé en ce que** des moyens de mesure de la température sont prévus.

9. Système selon la revendication 8, **caractérisé en ce que** les moyens pour la mesure de la température comprennent au moins une résistance sensible à la température, laquelle résistance sensible à la température est au moins en partie formée d'un seul tenant avec l'au moins une électrode d'excitation (4) et/ou l'au moins une électrode de réception (5).

10. Pneumatique (1) destiné à être rempli d'un gaz, **caractérisé en ce qu'**il est prévu, de préférence à un endroit peu exposé aux contraintes thermiques, au moins un système de mesure de la pression selon l'une des revendications 1 à 9.

11. Pneumatique (1) selon la revendication 10, **caractérisé en ce que** l'au moins un système de mesure de la pression est disposé sur une surface intérieure (12) ou une couche intérieure du pneumatique (1).

12. Pneumatique (1) selon la revendication 10 ou 11, **caractérisé en ce que** l'au moins un système de mesure de la pression est intégré dans la structure interne du pneumatique (1), en particulier au niveau de la couche textile, d'une ceinture, de la structure intérieure ou de la carcasse.
